# EUROPEAN PATENT SPECIFICATION

(11) **EP 3 958 673 B1**
(45) Date of publication and mention of the grant of the patent: **07.06.2023**
(21) Application number: 20722669.7
(22) Date of filing: 23.04.2020
(51) Int. Cl.: A01M 1/04

(54) **AN INSECT TRAP**
INSEKTENFALLE
PIÈGE POUR DES INSÈCTES

(30) Priority: 23.04.2019 GB 201905632
(43) Date of publication of application: 02.03.2022
(73) Proprietor: Pelsis Limited, Grimbald Crag Close Knaresborough North Yorkshire HG5 8PJ (GB)
(72) Inventor: KAYE, Mathew Varghese, Brierley Hill West Midlands DY5 1UT (GB)
(74) Representative: Appleyard Lees IP LLP
(86) International application number: PCT/IB2020/053855
(87) International publication number: WO 2020/217206

(56) References cited:
- EP-A1- 2 651 214
- WO-A2-2009/133372
- US-A1- 2002 032 980

## Description

### TECHNICAL FIELD

The present invention relates to an insect trap and more particularly to an insect trap comprising a back housing, a cover capable of transmitting light there through or a fascia, and a light source comprising light emitting diodes, hereafter LEDs, which emit ultra violet (UV) light. It expands upon the teaching of Applicants earlier application WO2019082051. It also relates to an insect trap in the form of a wall mounted sconce which is designed to project light upwardly and/ or downwardly, as opposed to outwardly perpendicularly to the plane of the wall (or the back housing of the insect trap) on which it is mounted.

### BACKGROUND OF THE INVENTION

Insect traps of various types are well known. A particularly common trap type, particularly for flying insects, comprises an insect attractant means, such as, for example a fluorescent UV light source and an insect trapping or killing means, such as, for example, an adhesive or glue board or paper or an electronic fly zapper, contained in a housing. The flying insects are attracted to the trap, enter the housing through openings and get caught on the trapping means or hit the zapper and are killed. To maintain efficiency of capture (or killing), the adhesive board or paper needs to be regularly replaced and/ or the trap cleaned. The adhesive board or paper also needs to be inspected and records kept. The lights also need to be cleaned as insects get "welded" to the bulbs, and in any case the lights have a limited life span.

A typical basic trap of this type, with a glue board, is disclosed in EP1457111 and comprises a translucent cover with an innermost surface which helps maximise UV emission from the trap, thus improving capture efficiency.

Related family member EP0947134 claims a further aspect of such a trap which is adapted to ensure the insect capture means is, to a significant extent, not readily visible through the cover. To this end, and in a particularly favoured embodiment, the cover comprises louver openings angled to also prevent the glue board being visible when viewed substantially perpendicularly to a plane of the back housing. A more favoured arrangement is one in which the louver openings are paired about a centre point to provide a downward and upward inflexion respectively. Such an arrangement helps to draw air in at the bottom of the trap.

Conventional UV fluorescent tubes are however expensive to run and need to be regularly replaced.

KR20160028318 disclosed a light trap using a LED bulb operating in the wavelength range of 460-550nm.

KR20170017186 discloses a light trap using an LED tube operating in the wavelength range 350-370nm.

WO2016310905 discloses an LED unit having a dual function. It emits light at two wavelengths 380-410 (UV) and 700-1500 (IR), The former provides a sterilising function and the later a drying function, the unit being used to kill fruit flies.

WO2009131340 discloses an LED alternative to a fluorescent bulb. KR2017000393 discloses a UV LED bulb which includes two LEDs in a tube to address issues of polarity when fitting in a conventional device.

EP 2 651 214 discloses a trap for catching or killing insects comprising a back housing, an insect capture or killing means, an insect attracting light source comprising light emitting diodes which emit ultra violet radiation.

What is apparent from this art is that it builds on the traditional art and assumes the LED's must be fitted in an equivalent manner to a traditional UV fluorescent bulb.

In WO2019082051 Applicant recognised that this is not the case and that alternative configurations of trap designs are possible, with the consequence trap design can be simplified and greater capture efficiency attained. This application builds upon the teaching and evidence presented therein and provides additional evidence which gives rise to alternative trap configurations for maximising capture efficiency, reducing capital cost and increasing running efficiency. It also extends the teaching beyond insect traps which predominantly project the insect attracting light outwardly into a room through a cover, which may contain apertures therein allowing the light out and insects in, substantially but not exclusively in a direction primarily perpendicular to it's back wall which, as stated previously, typically facilitates mounting of the insect trap to the wall

It is an object of the present invention to provide a simpler or cheaper trap from a manufacture and/ or maintenance perspective.

It is an alternative and further object to improve capture efficiency and to do so for traps having different configurations, including wall sconces where the light is primarily projected upwardly (towards a ceiling), although in some designs light may also be projected downwardly (towards a floor) as opposed to outwardly

### PRESENT INVENTION

According to a first aspect of the present invention there is provided a trap for catching or killing insects comprising
a. a back housing;
b. an insect capture or killing means;
c. an insect attracting light source; and
d. i) a cover, comprising one or more openings allowing insects to enter the trap, through which insect attracting light is dispersed or ii) a fascia and one or more independent openings allowing insects to enter the trap;
wherein the light source comprises light emitting diodes (LED's) which emit ultra violet (UV) radiation and the LED's are mounted in front of, and directed towards, the insect capture or killing means, but are not orientated to direct light to either the centre of the trap from its periphery or immediately inwardly onto the insect capture means.

By way of explanation WO2019082051 teaches precluding light from being directed immediately outwardly through the cover and the benefit, in terms of improved capture, of either directing light inwardly (test 1), splayed inwardly at 45 degrees (test 2) or across the trap (180 degrees, along plane X-X) (test 3).

In all cases the angles are based on the orientation of the LED (i.e. the orientation of its primary axis) noting that a standard LED will transmit light through about 120-130 degrees, i.e. 60-65 degrees either side of the primary axis. However, the intensity of the light drops by approximately 50% at the periphery.

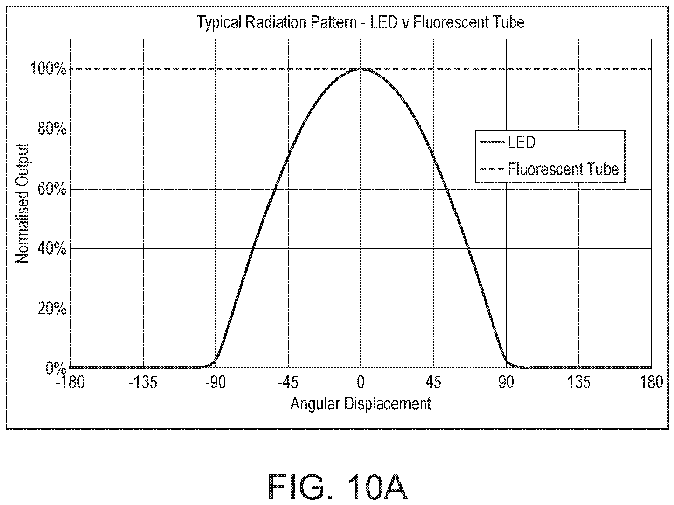

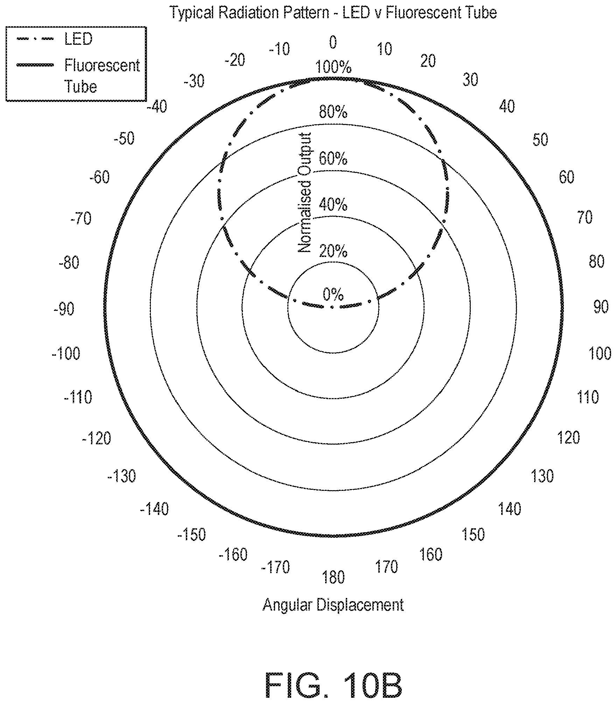

As is apparent from Figs 10a and 10b, a traditional fluorescent tube, as used with insect traps, transmits light omnidirectionally, through 360 degrees, and the intensity is the same in all directions. In contrast, and as illustrated in Figs 10a and 10b, the light from a UV LED source transmits light in a directional manner and with an intensity that varies with direction. Thus, it transmits light along its main axis with 100% intensity, but as one moves to either side of the axis the intensity drops off, such that at it's periphery (about +/- 65 degrees to the main axis) it is less than 50%. This fundamental difference in character is affects insect behaviour in a manner which helps explain why traps using UV LED strips need to be configured differently to insect traps using fluorescent technology. It is believed that directing UV LED outwardly in the direction of the cover effectively "distracts" incoming flying insects, and thus an approach which reduces the intensity by scattering the light using reflection and refraction gives rise to better catches.

Advantageously the LED's are either mounted between said back housing and i) the cover, which comprises one or more openings allowing insects to enter the trap, such that the light emitted is not transmitted directly outwardly through the cover and/ or one or more openings therein, or ii). the fascia and one or more independent openings that allow insects to enter the trap such that the light emitted is not transmitted directly outwardly through the one or more independent openings but instead is reflected either by reflection within the trap or by reflection from the back wall against which the trap is mounted.

Preferably the light is directed within the trap, and more preferably it is directed substantially towards the back housing or insect capture or killing means, (i.e. perpendicular to a plane of the insect capture or killing means (As Test 1). Alternatively (as Test 2) the light can be directed across the plane (parallel 180 degrees) with a spread radiating by as much as 60 to 65 degrees on either side of the axis of the main beam. Thus, a beam of light may be a narrow beam - only transmitting light beyond the perpendicular or it's primary axis by up to 15 degrees either side of the perpendicular or it's primary axis, an intermediate beam - transmitting light beyond the perpendicular or it's primary axis by up to 30 degrees, either side of the perpendicular or it's primary axis, a broad beam - transmitting light beyond the perpendicular or it's primary axis by up to 60 degrees either side of the perpendicular or it's primary axis, and in some circumstances an extra broad beam transmitting light beyond the perpendicular or it's primary axis by up to 75 degrees either side of the perpendicular or it's primary axis. As a consequence, the angle of incidence on the glue board can be anywhere between 15 and 75 degrees either side of the perpendicular. The beams may be configured to transmit light to one side of a perpendicular or it's primary axis only (e.g. towards or away from the centre point of the insect capture or killing means. The beam spread (narrow, intermediate, broad or extra broad) may be controlled by the use of, for example, guides or baffles, such as a U-shaped, or other shaped (C, L, V etc), shielding member which channel the light in the desired direction.

Preferably the guides or baffles prevent light being emitted directly outwardly (out of the cover).

The light may be guided by other means e.g. a lens or diffractor, particularly one which is opaque and functions to scatter the light as per the cover of EP1457111.

Preferably the trap has a means for lowering the power to either improve capture performance and/ or lower running cost.

In a separate an independent aspect related to performance Applicant addresses the change in performance with time of LED's by controlling the input power over time.

Thus, in a preferred embodiment the trap comprises an Intelligent Driver (iDriver) which will identify the UV LED serial to determine a start date. This is achieved using e.g. a RFID reader. The iDriver will store this data in its local memory. The iDrivers comes preloaded with the UV LED decay characteristics. At predetermined times, the iDriver will make corrections to the input power of the UV LEDs to deliver consistent UV LED output power.

By including a light sensor with the trap, it is also possible for the device to adjust the power in response to the ambient light.

Preferably the LED's are provided in the form of one or more strips comprising up to 60 LED's per strip. The LED's may comprise, for example, up to 10, 20, 30 40, 50 or 60 LED's depending on the size of the trap and the desired brightness.

The LED strips may run at a power (W) = volts (V) x current (i) which is less than full power. Typically, the LED's run at 24 V or 12 V and a dimmable LED driver is used to step down the voltage.

A typical LED used had a specification as follows:

**Table 1**

| (T_{g} =25°C, RH=30%) | | | |
|---|---|---|---|
| **Parameter** | **Symbol** | **Value** | **Unit** |
| **Peak wavelength ^{[1]}** | *λ*_{P} | 365 | nm |
| **Radiant Flux^{[2]}** | Φₑ^{[3]} | 420 | mW |
| **Forward Voltage ^{[4]}** | V_{F} | 3.6 | V |
| **Spectrum Half Width** | *Δ λ* | 9 | nm |
| **View Angle** | 2Θ_{1/2} | 120 | deg. |
| **Thermal resistance** | Rθ_{J-b}^{[5]} | 9.25 | °C / W |

However, a skilled person will recognise that UV emitting LED's with different specifications may be used.

By directing light in a manner as disclosed herein results in increased capture efficiency (compared to directing the light outwardly of the trap, as per the orientation of conventional fluorescent UV tubes).

To facilitate this, an array of LED lights may be mounted, on a support, in front of the back housing and/ or insect capture or killing means and behind the cover or fascia or may be positioned directly onto an inwardly facing face of the cover or fascia.

To maximize light emission a reflector may be placed behind the LED's or they may be mounted on a support which functions as a reflector e.g. a shaped metal or metallic component.

Preferably the LED's are positioned facing the insect capture or killing means. This may be directly (perpendicular) or at an angle.

The exact positioning will vary from trap design to trap design, but the LED's are most preferably placed towards the periphery of the insect capture or killing means of the trap.

There are a number of basic trap designs including, but not limited to:
a) One comprising a back housing against which a glue board is mounted with either a translucent (e.g. Genus Cobra manufactured by Brandenburg) or metal cover (e.g. Genus Fli manufactured by Brandenburg) with apertures via which insects enter and light exits the trap. These traditionally may comprise one or a plurality, e.g. 2, 3 or 4, fluorescent tubes positioned between the glue board and cover with light being projected directly outwardly, often using reflectors behind the fluorescent tubes, through the cover apertures (and cover where it is translucent);
b) One comprising a back housing, a front facing fascia with one or more independent openings directed towards a ceiling and / or floor with a glue board positioned across and between the back housing and front fascia, with its capture surface facing the opening (e.g. Genus Galaxy or Genus Illume alpha, manufactured by Brandenburg).

Again, the number and configuration of LED strips will depend on the trap design.

Where a single strip of arrays is used this may be towards the top or bottom of the insect capture or killing means of the trap.

Alternatively, it may be along a side of the trap.

Where two strips are used, they may be positioned towards the top and bottom (but not the middle) or on either side (but not the middle) of the insect capture or killing means of the trap.

In a third configuration they may be provided substantially about the periphery (but not the middle) of the insect capture or killing means of the trap.

In other words the LED's are orientated to direct light to the periphery of the traps insect capture or killing means, most preferably a glue board.

Preferably the LED carrying member(s) is/ are shaped to preclude light from being directed immediately outwardly, through the cover.

The use of LEDs minimises the need for ballast, which is substantially absent (compared to a trap using fluorescent bulbs) in the trap of the present invention.

Preferably the trap comprises LEDs with a peak wavelength of 360 - 370nm.

Preferably the trap is a SMART internet enabled trap.

According to a second aspect of the present invention there is provided a method of attracting flying insects to an insect trap comprising diffusing light emitted by light emitting diodes (LEDs) which emit ultra violet (UV) radiation directly onto peripheral areas of an insect capture or killing means but are not orientated to direct light to either the centre of the trap from its periphery or immediately inwardly onto the insect capture means.

Of course, the trap of the invention can include all the other features of traditional traps such as those disclosed in, for example, WO 2009/133372 and EP2651214.

According to a third aspect of the present invention there is provided a method of maximising the effective life of an insect trap comprising a UV LED light source as an attractant comprising a driver which adjusts the power input based on time.

Preferably, the trap comprises a driver capable of identifying a UV LED serial to determine a start date. This may be achieved using e.g. a RFID reader. The iDriver can store this data in its local memory and comes preloaded with the UV LED decay characteristics. At predetermined times, the iDriver will make corrections to the input power of the UV LEDs to deliver consistent UV LED output power.

The various aspects of the invention disclosed in WO2019082051 are described with reference to Figs 1 to 4, and Example 1, Tests 1 to 4, with the additional aspects claimed herein being more specifically described with reference to Example 2, Tests 1 to 13, Examples 3 to 5, and Figs 6 to 9.
Fig 1 is an exploded perspective view of a typical prior art insect trap showing the cover being removed and the frame slightly open with conventional UV fluorescent tubes;
Fig 2a is a trap of the invention with the cover on;
Fig 3 is a trap of the invention with the cover removed to show the back housing, an insect capture means, reflectors and a LED containing mount;
Fig 4 is a comparator photo' illustrating an illuminated insect trap with conventional fluorescent tubes (upper) verses one with LEDs (lower);
Fig 5 is a graph illustrating how a driver can correct for performance over time.
Fig 6a is a 3rd angle projection drawing of a Genus Cobra trap;
Fig 6b is a cross section of a Genus Cobra trap;
Fig 7a is a 3rd angle projection drawing of a Genus Fil trap;
Fig 7b is a cross section of a Genus Fli trap;
Fig 8a is a 3rd angle projection drawing of a Genus Galaxy trap;
Fig 8b is a cross section of a Genus Galaxy trap;
Fig 9a is a 3rd angle projection drawing of a Genus Illume trap;
Fig 9b is a cross section of a Genus Illume trap; and
Fig 10a and 10b illustrates the difference in radiation pattern between a fluorescent and LED light source.

### DETAILED DESCRIPTION

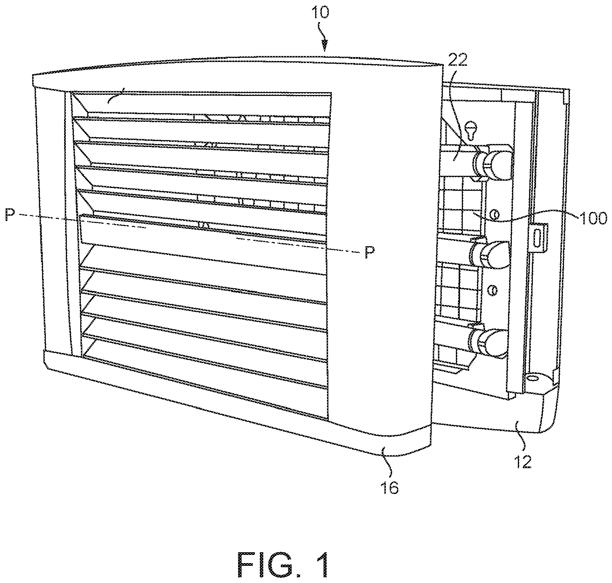

Fig 1 illustrates a typical prior art insect trap (10). It comprises a number of basic components: a back housing (12), a light source in the form of fluorescent, UV emitting tubes (22), an insect capture means (100) and a cover (16). The figure shows the fluorescent tubes carried on a frame hinged to the back housing. The plane of the back housing, and insect capture means, runs in the direction P-P

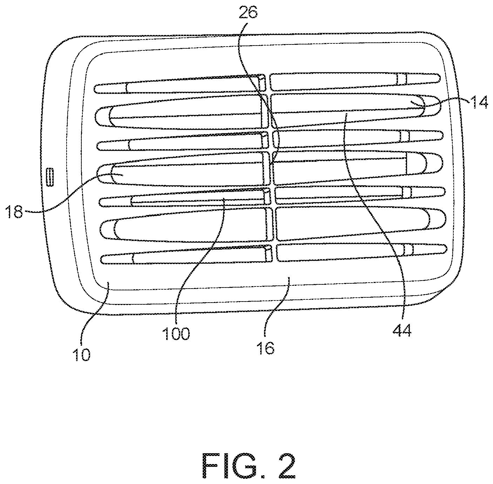

In contrast, and as illustrated in Figs 2, 3, 4 (lower) and 6, a preferred insect trap of the invention (10) comprises a cover (16) which hides the LEDs from view. All that can be seen through the cover openings (18) (when the lights are off) are a minor portion of the glue board (100), a minor portion of the mount (14) supporting the LEDs, and a minor portion of the reflectors (44).

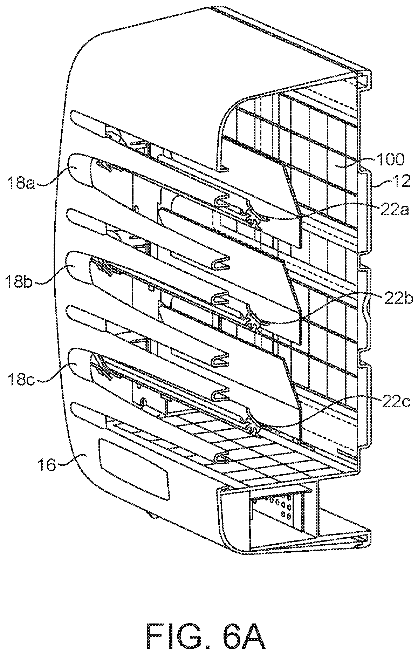

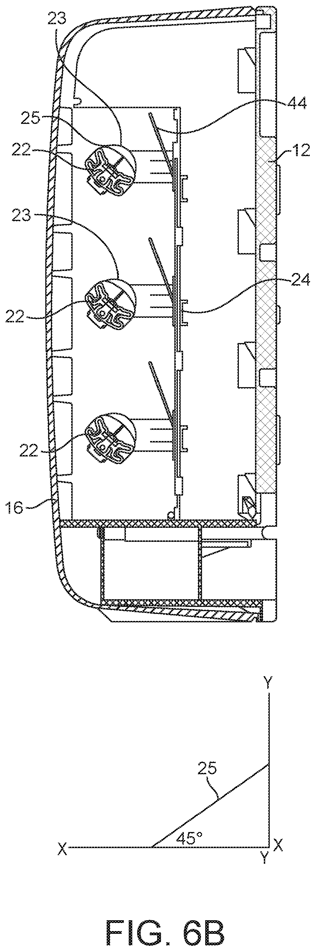

Referring more specifically to Figs 6a and 6b one can see that the trap has three LED strips (22) positioned between the back housing (12) (and glue board (100)) and front cover (16). The strips are positioned on carrying members (24) and are positioned across the trap towards the top, bottom and middle with the light being directed at an angle of 45 degrees from the perpendicular of plane P-P or between axis X-X (outwardly/ inwardly) and Y-Y.(upwardly downwardly)

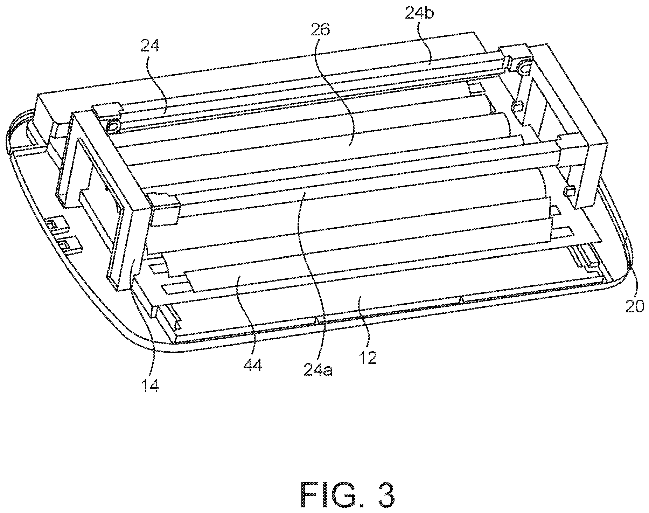

Referring to Fig 3 the mount (14) projects from, and is mounted to, the back housing (12) and comprises two pairs of facing LED carrying members (24a; 24b) which are inset from, a perimeter (20) of the back housing. Such a configuration has been shown by experiment, Example 1 below, to significantly improve insect capture.

This or, for example, a substantially circular configuration orientates the LEDs in facing relationship to direct light to the centre (26) of the trap.

A further and significant feature in maximising capture efficiency was to shield the LEDs so the light is directed in a plane (P-P) parallel to the back housing (12). This may be achieved by housing the LEDs in e.g. a substantially U or other shaped LED carrying member(s) (24) (the LEDs are not visible in the Fig) which precludes light from being directed immediately outwardly through the cover (16) or immediately inwardly onto the insect capture means (100).

The cover (16) is made of a translucent material and has an innermost surface which is shaped or roughened to maximise the transmission of UV light as set out in EP1457111. The openings (18) which allow insects to enter the trap are shaped to prevent the lights (22) being visible when viewed substantially perpendicularly to the normal plane (P-P) of the back housing (12). The general principle of maintaining a pleasant appearance of a trap is set out in EP0947134.

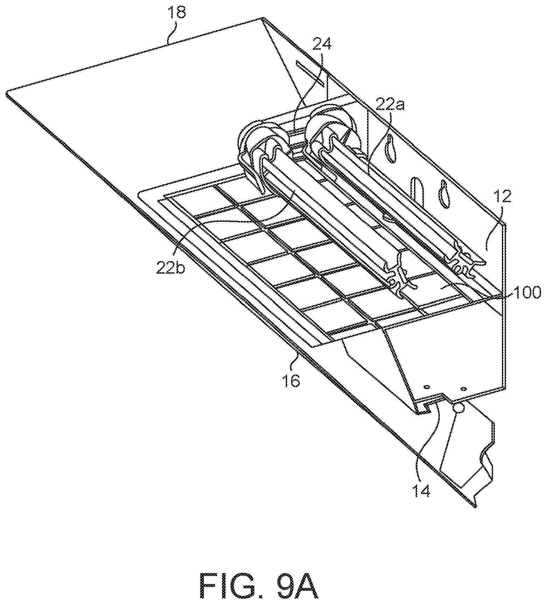

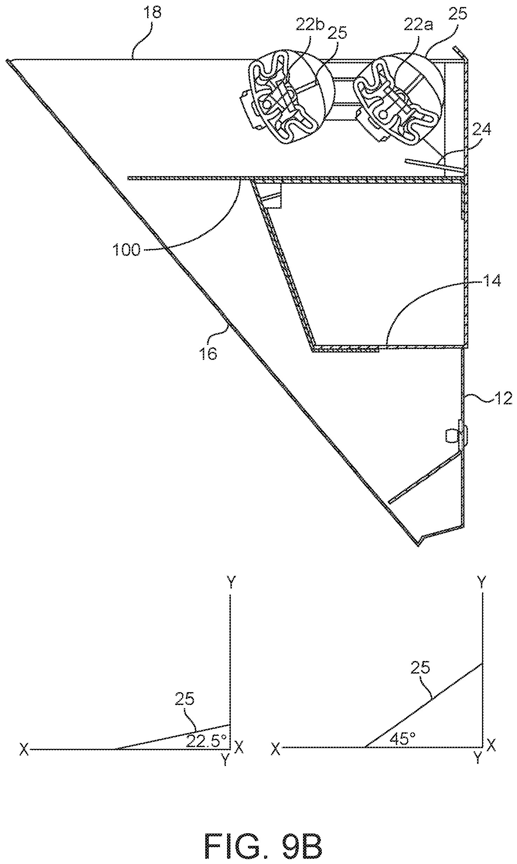

The data supporting the earlier claimed invention is set out in the Example 1 below with additional data supporting additional and alternative aspects disclosed with reference to Examples 2 to 7 and Figs 6 to 9.

### EXAMPLE 1

### Methodology

1. Test Procedure - 1-hour Fly Catch tests (Single trap test)
   **1.1.** Houseflies were reared using a standard rearing procedure. Three to four days old, mixed sex flies were used in the experiments;
   **1.2.**200x flies were used for each replicate;
   **1.3.** Before commencing the test, the Fly Test Room was cleaned of any residual flies from previous tests. Walls and floors were moped using a mild detergent in water.
   **1.4.** Test Room measures 6 metres (length) by 3 metres (width) by 3 metres (height);
   **1.5.** The test room contains 8x 40Watt Fluorescent tubes evenly spaced and mounted on the ceiling;
   **1.6.** Each tube is 4m in length and is a 'Cool white' colour;
   **1.7.** Ambient UVA and the visible light intensity of the rooms fluorescent light lamps were measured immediately before the release of flies into the room;
   **1.8.** Immediately after the commencement of each test ambient UVA and visible light were measured at a fixed point, from the centre of the room. The reading was taken with the sensor face parallel to the ceiling, at a distance of 1.5 metres, from the ground;
   **1.9.** Temperature was maintained at 25±3 °C and temperature and relative humidity was recorded immediately before the release of any flies into the room;
   **1.10.** Traps were placed at 1.8m from the floor to the underside of the trap, centrally on either of the long walls;
   **1.11.** Trap UV output was measured by calibrated UVA test equipment on the centre UV face of the trap at a distance of 1 meter from the face.
   **1.12.** Two Hundred (200x) mixed sex flies were transferred into the room, at the end farthest from the door, in the corner farthest from the trap. allowed to acclimatize for 30 minutes to the new room environment with the traps switched OFF;
   **1.13.** After 30 minutes of acclimatization, the traps were switched ON, environmental parameters recorded, and the traps were allowed to operate. The flies were then released, and the numbers of flies trapped was recorded every 30min for a total of 60minutes.

### Results

The results from sequential tests are set out in the Tables below:

### Test 1

### 40 LED array (comparing outwardly and inwardly facing LEDs)

**Table 2**

| Design | Ave Catch (60min) |
|---|---|
| LED Outwardly | 44% |
| LED Inwardly | 93% |

Surprisingly this test suggested that, unlike with fluorescent tubes, it was not desirable to directly transmit the light outwardly, to obtain the most efficient capture.

### Test 2

28 LED array with directional testing and testing the effect of the translucent cover.

**Table 3**

| Design | Ave Catch (60min) |
|---|---|
| LED Inwardly (90 deg - towards glue board) | 50% |
| LED Parallel (180 deg) | 72% |
| LED Splayed (45 deg inward) | 80% |
| LED Splayed (45 deg inward) translucent cover blackened | 44% |

This test demonstrated that the translucent cover was, like with a traditional fluorescent tube, still playing a significant effect in attracting insects, and that the "internal lighting" of the trap was of significance.

### Test 3

30 LED array - Additional effect of directional control, using guides or baffles, to limit the direction of light transmission and further effect of translucent cover.

**Table 4**

| Design | Ave Catch (60min) |
|---|---|
| LED Parallel (180 deg) plus directional guides precluding light being transmitted directly outwardly | 83% |
| LED Parallel (180 deg) plus directional guides but with translucent cover blackened | 40% |

The results showed that the use of guides to control the direction of emission maximised catch and that the translucency of the cover was of significance.

### Test 4

30 LED array - Comparative study between UV fluorescent trap and UV LED trap of otherwise equivalent design.

**Table 5 - Cobra trap (3 x fluorescent tubes)**

| **Time post insect release (minutes)** Replicate | | **Cobra trap (fluorescent)** | | | | | **Catch (Ave)** |
|---|---|---|---|---|---|---|---|
| | | **1** | **2** | **3** | **4** | **5** | |
| | | 46 | 62 | 64 | 50 | 32 | 50.8 |
| | 30 | 58 | 86 | 80 | 72 | 58 | 70.8 |
| | 60 | | | | | | |

**Table 6 -Cobra trap (30 LED (UV) array)**

| **Time post insect release (minutes)** Replicate | | **Cobra trap (LED)** | | | | | **Catch (Ave)** |
|---|---|---|---|---|---|---|---|
| | | **1** | **2** | **3** | **4** | **5** | |
| | | 59 | 53 | 53 | 55 | 52 | 54.4 |
| | 30 | 88 | 83 | 82 | 84 | 80 | 83.4 |
| | 60 | | | | | | |

The results show a statistically significant improvement in catch rate over 60 minutes (20% improvement).

**Table 7 (Statistical analysis on Table 5 data)**

| t-Test: Paired Two Sample for Means | 60mins | | | |
|---|---|---|---|---|
| | | *CCT* | | *LCT* |
| Mean | | | 70.8 | 83.4 |
| Variance | | | 161.2 | 8.8 |
| Observations | | | 5 | 5 |
| Pearson Correlation | | | -0.223025967 | |
| Hypothesized Mean Difference | | | 0 | |
| df | | | 4 | |
| t Stat | | | -2.061422972 | |
| P(T<=t) one-tail | | | 0.054138833 | |

A statistically significant p value of 0.05 confirms the greater capture efficiency of the LED trap over a conventional fluorescent tube trap after 60 minutes of operation.

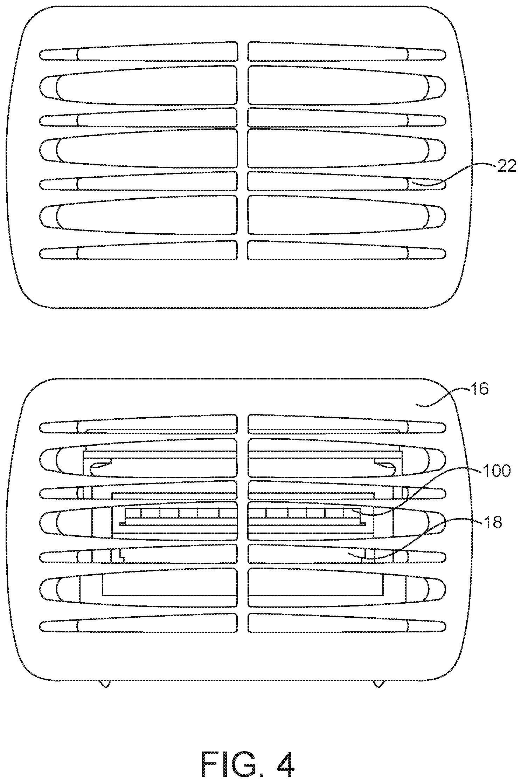

Finally, Fig 4 illustrates, photographically, the different appearance of the two traps - LED (lower) compared to fluorescent (upper).

### EXAMPLE 2

In a fresh set of experiments, designed to identify key parameters affecting "catch", Experiments were grouped, and compared to a "standard" - catch (obtained using a Cobra insect trap, which used 3 x 15W fluorescent tubes, positioned across a back board using approximately 45W). The Cobra trap is illustrated in Fig 1, and the results are illustrated in the comparative reference of Table 5 reproduced in different form as Table 8.

**Table 8**

| Trap type | Time (min) | % catch | Power (W) | Fluorescent | No tubes |
|---|---|---|---|---|---|
| Cobra | 30 | 51 | 3 x 15W | | 3 |
| | 60 | 71 | | | |

### Series 1

In S1 Tests 1 and 2, the effect of reduced power (compared to nominally 45W, and in reality approx. 54W - Table 8) was explored using a set up mimicking the traditional set up with three strips of LEDs positioned to emit light substantially evenly over the catch area of a glue board (as fluorescent tubes), BUT with them directed towards the glue board, as opposed to outwardly, based on the results of Example 1 in international application WO2019082051.

### S1 Test 1

### Results

**Table 9**

| Trap type | Time (min) | % catch | Power (W) | LED | No strips and LED's per strip |
|---|---|---|---|---|---|
| Cobra | 10 | 43 | 11.8 | yes | 3 x 15 |
| | 30 | 63 | | | |
| | 60 | 77 | | | |

### S1 Test 2

### Results

**Table 10**

| Trap type | Time (min) | % catch | Power (W) | LED | No strips and LED's per strip |
|---|---|---|---|---|---|
| Cobra | 10 | 51 | 17.8 | yes | 3 x 15 |
| | 30 | 68 | | | |
| | 60 | 83 | | | |

### Conclusion

It can also be seen by comparing S1, Tests 1 and 2 with Table 8 above, that the catch (at 60 minutes) increases with power from 77% to 83%, but that al low power (compared to the at least 45 W used with fluorescent tubes) is still more effective (71% catch).

### Series 2

In series 2, applicant explored the effect of adding a diffuser (lens) in front of the LED's, to direct! scatter the light, in a similar manner to the way light is transmitted through a translucent cover (outwardly) in a conventional trap, since the cover increases catch. The results the S2, Tests 3 and 4, were compared with the S1 Tests 1 and 2.

### S2 Test 3

### Results

**Table 11**

| Trap type | Time (min) | % catch | Power (W) | LED | No strips and LED's per strip | Comment |
|---|---|---|---|---|---|---|
| Cobra | 10 | 64 | 11.8 | yes | 3 x 15 | Vs 43 |
| | 30 | 78 | | | | Vs 63 |
| | 60 | 84 | | | | Vs 77 |
| | | | | | | Example 1 |

### S2 Test 4

### Results

**Table 12**

| Trap type | Time (min) | % catch | Power (W) | LED | No strips and LED's per strip | Comment |
|---|---|---|---|---|---|---|
| Cobra | 10 | 51 | 17.8 | yes | 3 x 15 | V 51 |
| | 30 | 71 | | | | V 68 |
| | 60 | 79 | | | | Vs 83 |
| | | | | | | Example 2 |

### Conclusion

The results are inconclusive, but the trend suggests a diffuser improves/ speeds catch.

### Series 3

In a further series of experiments the effect of reducing the intensity of each of the three LED groupings was explored with a power input of 11.8W (approx. a quarter of a traditional fluorescent trap).

### S3 Test 5

### Results

**Table 13**

| Trap type | Time (min) | % catch | Power (W) | LED | No strips and LED's per strip |
|---|---|---|---|---|---|
| Cobra | 10 | 48 | 11.8 | yes | 3 x 54 |
| | 30 | 68 | | | |
| | 60 | 80 | | | |

### S3 Test 6

### Results

**Table 14**

| Trap type | Time (min) | % catch | Power (W) | LED | No strips and LED's per strip |
|---|---|---|---|---|---|
| Cobra | 10 | 44 | 11.8 | yes | 3 x 18 |
| | 30 | 67 | | | |
| | 60 | 85 | | | |

### S3 Test 7

### Results

**Table 15**

| Trap type | Time (min) | % catch | Power (W) | LED | No strips and LED's per strip |
|---|---|---|---|---|---|
| Cobra | 10 | 46 | 11.8 | yes | 3 x 15 |
| | 30 | 65 | | | |
| | 60 | 78 | | | |

### Conclusion

It can be seen from the three results that the catch from each of Tests 5 to 7 performed substantially equivalently, indicating it is possible to use a set up that draws much less power than a conventional set up to achieve results which are better that an equivalent fluorescent set up.

### Series 4

Up to this point Applicant had considered configurations in which the LED's were positioned across the trap, in a manner substantially equivalent to a set up using fluorescent UV, sources BUT with the LED UV source being substantially unidirectional towards (and not away from) the glue board.

They next considered whether reducing the number of UV strips would affect catch rates. The results provided an unexpected finding in that two Examples, from six basic configurations tested, produced catch rates in excess of 90%. These are set out in S4 Tests 8-13 below:

### S4 Test 8

### Results

**Table 16**

| Trap type | Time (min) | % catch | Power (W) | LED | No strips and LED's per strip |
|---|---|---|---|---|---|
| Cobra | 10 | 51 | 9 | yes | 16-30-0 |
| | 30 | 69 | | | |
| | 60 | 82 | | | |

### S4 Test 9

### Results

**Table 17**

| Trap type | Time (min) | % catch | Power (W) | LED | No strips and LED's per strip |
|---|---|---|---|---|---|
| Cobra | 10 | 32 | 10.5 | yes | 54-0-54 |
| | 30 | 54 | | | |
| | 60 | **90** | | | |

### S4 Test 10

### Results

**Table 18**

| Trap type | Time (min) | % catch | Power (W) | LED | No strips and LED's per strip |
|---|---|---|---|---|---|
| Cobra | 10 | 34 | 11.8 | yes | 16-30-0 |
| | 30 | 53 | | | |
| | 60 | 70 | | | |

### S4 Test 11

### Results

**Table 19**

| Trap type | Time (min) | % catch | Power (W) | LED | No strips and LED's per strip |
|---|---|---|---|---|---|
| Cobra | 10 | 35 | 17.8 | yes | 8-15-0 |
| | 30 | 61 | | | |
| | 60 | 85 | | | |

### S4Test 12

### Results

**Table 20**

| Trap type | Time (min) | % catch | Power (W) | LED | No strips and LED's per strip |
|---|---|---|---|---|---|
| Cobra | 10 | 40 | 17.8 | yes | 15-0-15 |
| | 30 | 65 | | | |
| | 60 | **92** | | | |

### S4 Test 13

### Results

**Table 21**

| Trap type | Time (min) | % catch | Power (W) | LED | No strips and LED's per strip |
|---|---|---|---|---|---|
| Cobra | 10 | 40 | 18 | yes | 8-15-0 |
| | 30 | 50 | | | |
| | 60 | 74 | | | |

### Conclusion

As can be seen from the S4 Tests above that the configurations (S4 Tests 9 and 12) in which the lighting was directed towards the periphery, top and bottom, but not the centre of the insect capture or killing means, irrespective of power, produced quite outstanding results at 60 minutes.

The inference from this, which may be extrapolated, is that directing the lighting towards one or more peripheral edges (at or inset from the perimeter) BUT not directly towards the centre of the trap (centre 20-40%) appears optimum.

Whether this is one edge, top/ bottom, side/side, or substantially the full perimeter has yet to be determined, but it is clear that the UV light should not be directed towards or positioned at the centre of the trap, by which is meant the at least central 20%, through 25%, 30%, 35% to 40% by area.

### EXAMPLE 3

Example 3 demonstrates how to intelligently increase the power input overtime to account for a reduction in performance of LED's with time.

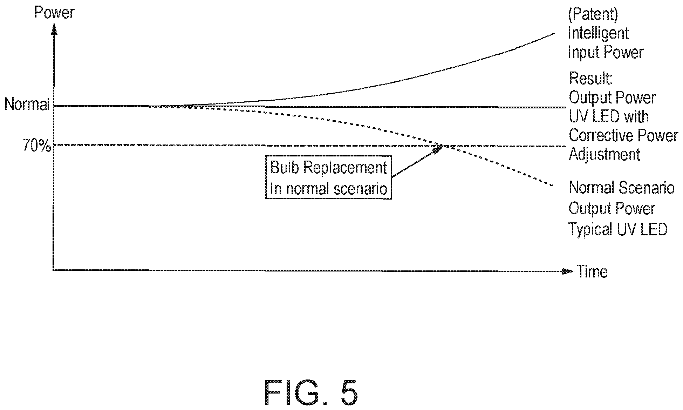

This is illustrated with reference to Fig 5 which is a graph showing Power (Y axis) and time (X axis). The middle line is representative of an "ideal" and the lower curve shows a reduction in performance over time. By means of s simple algorithm it is possible to periodically adjust the power input (upper curve) to compensate for a loss in performance (Lower curve).

Thus, in another aspect of the present invention there is provided a trap and methodology which adjusts power to ensure a consistent UV LED output.

The novel method provides an increase of power through a driver that corresponds to a decrease of output power of the UV LED over time. This ensures that the UV LED's function at optimal luminescence, at all times, during its operational life. In this regard, a UV LEDs typically has a decay of power output over time during normal operations. This reduces its effectiveness as a flying insect attractant. Current practice suggests replacement of the UV LED source at a predetermined time e.g. 2 years.

A corrective power driver that automatically increases power when the UV LEDs delivers lower output provides for a longer life and optimum efficiency. It ensures UV LED output power remains linear and consistent throughout its specified lifetime.

An Intelligent Driver (iDriver) identifies the UV LED serial to determine the start date. This is achieved using e.g. a RFID reader. The iDriver will store this data in its local memory. The iDrivers comes preloaded with the UV LED decay characteristics. At predetermined times, the iDriver will make corrections to the input power of the UV LEDs to deliver consistent UV LED output power.

### EXAMPLES 4 -7

Examples 4 and 7 illustrate variations for different trap configuration.

### EXAMPLE 4. Genus Cobra

Figs 6a and 6b illustrate the Genus Cobra in more detail. It comprises a back housing (12), a cover (16) and a glue board (100). Its three primary openings, from top to bottom, (18a, 18b and 18c) are located approximately mid-way between each of the top, middle and bottom third of the trap. The cover (16) is a translucent cover designed to scatter light. Three LED strips (22) are located between the cover (16) and the back-housing (12) which supports the glue board (100).The three light strips, (22a, 22b, 22c) are fitted to carrying members (24) and are directed such that the main axis (25) is at an angle of between 30 and 60 degrees, optimally 45 degrees reading from the X-X axis to the Y-Y axis (Test 2).

### EXAMPLE 5 Genus Fli

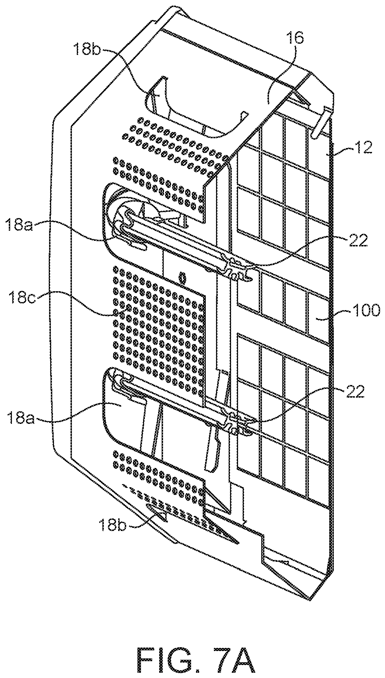

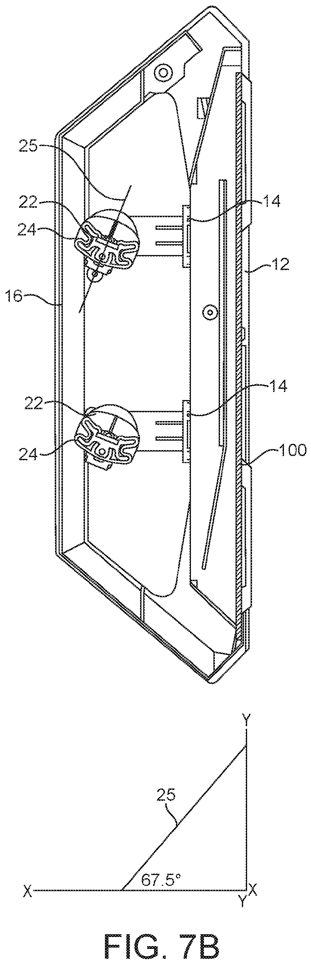

Figs 7a and 7b illustrates a Genus Fli trap. In contrast to the Genus Cobra trap illustrated in Figs 6a and 6b and referenced in Examples 2 and 4, which comprised 3 LED strips of lights (22) and a translucent cover (16), the Genus Fli comprises a back housing (12) supporting a glue board (100), and a metal cover (16) with four major openings (18), two (18a) in a front cover surface which lies parallel with the glue board and back housing and two (18b) in side cover surfaces as well as many (18c ) smaller holes apertures formed in groups there between. It comprises a mount (14) and LED carrying members (24) which support two LED strips each comprising a plurality of LEDs (22). The LEDs are positioned in alignment with the two primary openings (18a) in the cover (16) and each lens (23) has a primary lens axis (25) at an angle of between plus or minus 60 and 75 degrees, optimally 67.5 degrees reading from the X-X axis to the Y-Y axis.

This angle was selected based on the following test data:

**Test 14/ Table 21**

| | | LED Strip Angles - Top/Bottom | | |
|---|---|---|---|---|
| | | 180/180 | 45/45 | 67.5/67.5 |
| Catch % mins | 10 | 7.0 | 13.6 | 18.3 |
| | 30 | 11.5 | 27.6 | 32.9 |
| | 60 | 23.0 | 43.2 | **50.0** |

**Test 15/ Table 22**

| | | LED Strip Angles - Top/Bottom | | | | | |
|---|---|---|---|---|---|---|---|
| | | 180/180 | 45/45 | 45/67.5 | 67.5/-45 | 67.5/45 | 67.5/67.5 |
| Catch % mins | 10 | 8.0 | 19.5 | 19.6 | 16.0 | 18.7 | 18.5 |
| | 30 | 16.9 | 30.5 | 32.0 | 32.0 | 35.0 | 34.9 |
| | 60 | 27.4 | 45.0 | 46.4 | 49.7 | 51.3 | **54.5** |

**Test 16/ Table 23**

| | | LED Strip Angles - Top/Bottom | | | | |
|---|---|---|---|---|---|---|
| | | 180/180 | 45/45 | 67.5/-45 | 67.5/45 | 67.5/67.5 |
| Catch % mins | 10 | 8.8 | 21.0 | 14.0 | 16.0 | 20.4 |
| | 30 | 16.0 | 34.7 | 28.8 | 26.7 | 35.8 |
| | 60 | 31.2 | 50.0 | 42.8 | 43.7 | **56.4** |

### Conclusion

From these results the best results are obtained with the primary lens axis having a greater angle of incidence measured from the glue board towards the primary openings (18a) such that the preferred angle is between plus or minus 60 and 75 degrees reading from the X-X axis to the Y-Y axis.

### EXAMPLE 6

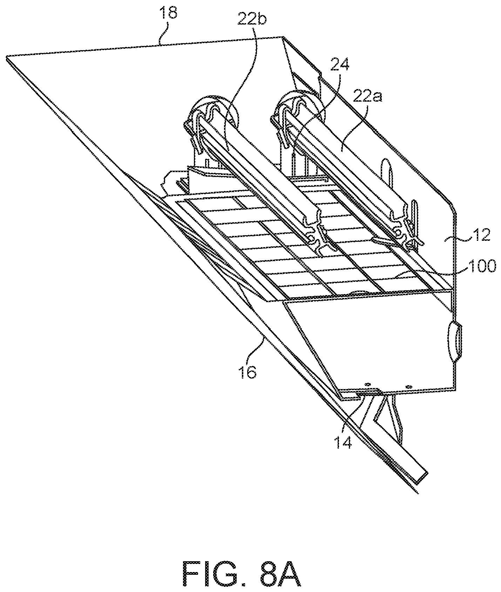

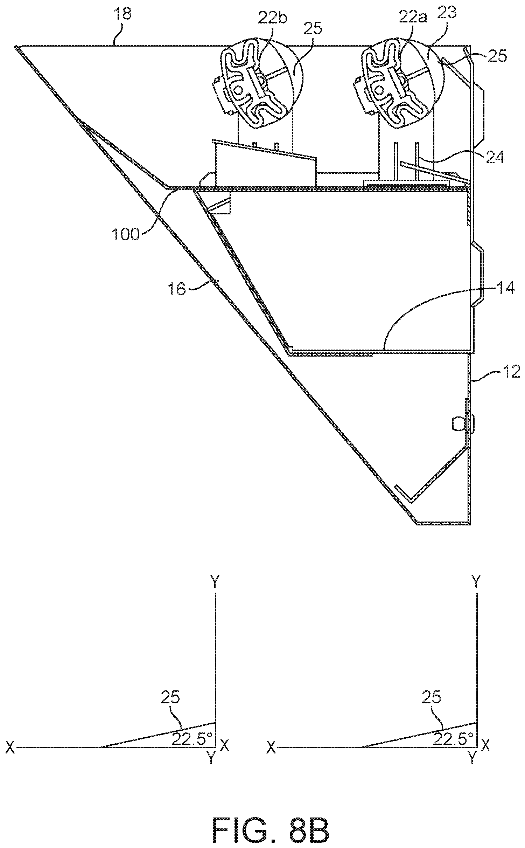

Figs 8a and 8b illustrates a Genus Galaxy trap. In contrast to the previous traps, the Genus Galaxy is a wall sconce trap and differs fundamentally in that it's front facing fascia (16) is closed (no outwardly facing openings) and the light is instead directed upwardly towards the ceiling (and optionally downwardly towards the floor) through one or more openings (18). It comprises a back housing (12), for attaching the trap to a wall, but in contrast to the previously described traps the glue board (100) is positioned along the horizontal axis X-X (and not the vertical axis Y-Y) between the fascia (16) and the back housing (12). It comprises a mount (14) and LED carrying members (24) which support two LED strips (22), each comprising a plurality of LEDs. The LED strips are positioned in spaced relationship between the fascia (16) and back housing (12) below the opening (18). There is a wall side strip (22a) and a fascia side strip (22b) and each lens (23) has a primary lens axis (25) at an angle of between plus or minus 15 and 30 degrees, optimally 22.5 degrees reading from the X-X axis to the Y-Y axis.

In this trap the LED's project light at 65 degrees either side of the primary axis (25). However, they are configured such that the primary axis hits the back wall at the boundary with the opening (18) such that it reflects off the back wall and the back housing across the opening and is not directed immediately towards the ceiling. It also reflects off the back housing (due to the spread) and in the case of light emitted from the fascia side strip (22b) light also reflects off the wall side strip (22a) such that additionally the glue board (100) is lit.

This angle was selected based on the following test data:

**Test 17/ Table 24**

| | | Catch % at 60 minutes | | | | |
|---|---|---|---|---|---|---|
| | | Cover Side LED Strip | | | | |
| | LED Strip Angle | -135 | -90 | -45 | 22.5 | 90 |
| Wall Side LED Strip | 90 | | | | | 50.0 |
| | 22.5 | | | | **70.7** | |
| | -45 | | | 63.8 | | |
| | -90 | | 43.4 | | | |
| | -135 | 64.0 | | | | |

### Conclusion

From these results the best results are obtained with the primary lens axis (25) having a greater angle of incidence measured from the glue board towards the primary openings (18a) such that the preferred angle is between plus or minus 15 and 30 degrees reading from the X-X axis to the Y-Y axis

### EXAMPLE 7 Genus Illume alpha

Similarly to Example 6, this is a wall sconce trap comprising a back housing (12), a fascia (16) and a glue board (100). Its opening (18) is at the top of the trap where the light from two light strips, (22a) and (22b) is emitted. The primary difference between this and Example 6 is that the unit is smaller resulting in the fascia side strip (22b) being located closer to the wall side strip (22a). In consequence to ensure that the primary axis hits the back wall at the boundary with the opening (18) such that it reflects off the back wall and the back housing across the opening and is not directed immediately towards the ceiling, and it also reflects off the back housing (due to the spread) the two strips are disposed at different angles, the wall side strip (22a) having an angle of between plus or minus 30 and 60 degrees, optimally 45 degrees reading from the X-X axis to the Y-Y axis and the fascia side strip (22b) having an angle of between plus or minus 30 and 60 degrees, optimally 22.5 degrees reading from the X-X axis to the Y-Y axis .

## Claims

1. A trap (10) for catching or killing insects comprising
a. a back housing (12);
b. an insect capture or killing means (100);
c. an insect attracting light source (22) comprising light emitting diodes (LED's) which emit ultra violet (UV) radiation through a lens (23); and
d
i) a cover (16), comprising one or more openings (18) allowing insects to enter the trap, through which insect attracting light is dispersed or
ii) a fascia (16) and one or more independent openings (18) allowing insects to enter the trap, through which insect attracting light is dispersed the trap (10) being **characterized in that** the (LED's), which emit ultra violet (UV) radiation, are:
i) not orientated to direct light to either a centre of the trap from a periphery or immediately inwardly onto the insect capture means,
ii) not arranged to direct light substantially perpendicularly to a normal plane (P-P) of the back housing, and
iii) not arranged to direct light immediately outwardly through the cover (16), but
iv) are mounted in front of, and directed towards, the insect capture or killing means or the back housing (12), each lens (23) having a primary lens axis (25) at an angle of between plus or minus up to 75 degrees reading from a horizontal X-X axis to a vertical Y-Y axis.

2. A trap as claimed in claim 1 wherein a beam of light transmitted from the LED is a narrow beam at an angle of between plus or minus up to 15 degrees reading from the horizontal X-X axis to the vertical Y-Y axis.

3. A trap as claimed in claim 1 wherein a beam of light transmitted from the LED is an intermediate beam at an angle of between plus or minus up to 30 degrees reading from the horizontal X-X axis to the vertical Y-Y axis.

4. A trap as claimed in claim 1 wherein a beam of light transmitted from the LED is a broad beam at an angle of between plus or minus up to 45 degrees reading from the horizontal X-X axis to the vertical Y-Y axis.

5. A trap as claimed in claim 1 wherein a beam of light transmitted from the LED is an extra broad beam - at an angle of between plus or minus up to 75 degrees reading from the horizontal X-X axis to the vertical Y-Y axis.

6. A trap as claimed in any of claims 1 to 5 wherein the beam is configured to transmit light to one side of the Y-Y axis only.

7. A trap as claimed in any of claims 1 to 5 wherein the beams is configured to transmit light to both sides of the horizontal X-X axis

8. A trap as claimed in any of the preceding claims wherein the LED's are positioned on a shielding member, which channels light in the desired direction.

9. A trap as claimed in any of the preceding claims further comprising a diffractor.

10. A trap as claimed in claim 9 wherein the diffractor is opaque.

11. A trap as claimed in any of the preceding claims comprising a pair of LED strips positioned towards the top and bottom, but not the middle, or on either side, but not the middle, of the insect capture or killing means of the trap.

12. A trap as claimed in any of claims 1 to 11 comprising a single strip of LED's positioned towards the periphery of the trap.

13. A trap as claimed in claim 1 which is a wall sconce comprising a fascia (16) and one or more independent openings (18) allowing insects to enter the trap and through which insect attracting light is dispersed, and wherein the glue board is positioned along the horizontal axis X-X (and not the vertical axis Y-Y) between the fascia (16) and the back housing (12).

14. A trap as claimed in claim 13 comprising a wall side LED strip (22a) and a cover side LED strip (22b) and wherein each lens (23) has a primary lens axis (25) at an angle of between plus or minus 15 to 60 degrees, reading from the reading from the horizontal X-X axis to the vertical Y-Y axis.

15. A trap as claimed in claim 14 wherein at least one LED strip has a primary lens axis (25) at an angle of between plus or minus 22.5 or 45 degrees, reading from reading from the horizontal X-X axis to the vertical Y-Y axis.

16. A trap as claimed in any of the preceding claims further comprising means for lowering the power to either improve capture performance and/ or lower running cost.

17. A trap as claimed in any of the preceding claims wherein an array of LEDs (22) are mounted on an inner face of the cover (16).

18. A trap as claimed in any of the preceding claims which is a SMART internet enabled trap.

19. A method of attracting flying insects to an insect trap (10) comprising a back housing (12), an insect capture means (100), a cover or fascia (16) and one or more openings (18) allowing insects to enter the trap, the method comprising diffusing light, emitted by light emitting diodes (LEDs) (22) which emit ultra violet (UV) radiation, through a lens (23) such that the light is
i) not orientated to either a centre of the trap from its periphery or immediately inwardly onto the insect capture means,
ii) not arranged to direct light substantially perpendicularly to a normal plane (P-P) of the back housing (12), and
iii) not arranged to direct light immediately outwardly through the cover (16), but
iv) is directed towards, the insect capture or killing means or the back housing (12), each lens (23) having a primary lens axis (25) at an angle of between plus or minus up to 75 degrees reading from a horizontal X-X axis to a vertical Y-Y axis .

20. A method as claimed in claim 19 in which a driver adjusts power input based on time to maximise the effective life of the UV LED light source.

## Patentansprüche

1. Falle (10) zum Fangen oder Töten von Insekten, umfassend:
a. ein hinteres Gehäuse (12);
b. ein Insekteneinfang- oder -tötungsmittel (100);
c. eine insektenanlockende Lichtquelle (22), umfassend lichtemittierende Dioden (LEDs), die Ultraviolett- (UV)-Strahlung durch eine Linse (23) hindurch emittieren; und
d.
i) eine Abdeckung (16), umfassend eine oder mehrere Öffnungen (18), die ermöglichen, dass Insekten in die Falle eintreten, durch die hindurch insektenanlockendes Licht gestreut wird, oder
ii) eine Blende (16) und eine oder mehrere unabhängige Öffnungen (18), die ermöglichen, dass Insekten in die Falle eintreten, durch die hindurch insektenanlockendes Licht gestreut wird,
wobei die Falle (10) **dadurch gekennzeichnet ist, dass** die LEDs, die Ultraviolett- (UV)-Strahlung emittieren, wie folgt sind:
i) nicht orientiert, um Licht entweder von einer Peripherie aus zu einem Zentrum der Falle oder unmittelbar einwärts auf das Insekteneinfangmittel zu lenken,
ii) nicht angeordnet, um Licht im Wesentlichen senkrecht zu einer Normalebene (P-P) des hinteren Gehäuses zu lenken, und
iii) nicht angeordnet, um Licht unmittelbar auswärts durch die Abdeckung (16) hindurch zu lenken, sondern
iv) vor dem Insekteneinfang- oder -tötungsmittel oder dem hinteren Gehäuse (12) und zu diesem gerichtet montiert sind, wobei jede Linse (23) eine Primärlinsenachse (25) in einem Winkel bis zu zwischen plus oder minus 75 Grad aufweist, abgelesen von einer horizontalen X-X-Achse zu einer vertikalen Y-Y-Achse.

2. Falle nach Anspruch 1, wobei ein Lichtstrahl, der von der LED ausgesendet wird, ein schmaler Strahl mit einem Winkel bis zu zwischen plus oder minus 15 Grad ist, abgelesen von der horizontalen X-X-Achse zu der vertikalen Y-Y-Achse.

3. Falle nach Anspruch 1, wobei ein Lichtstrahl, der von der LED ausgesendet wird, ein mittlerer Strahl mit einem Winkel bis zu zwischen plus oder minus 30 Grad ist, abgelesen von der horizontalen X-X-Achse zu der vertikalen Y-Y-Achse.

4. Falle nach Anspruch 1, wobei ein Lichtstrahl, der von der LED ausgesendet wird, ein breiter Strahl mit einem Winkel bis zu zwischen plus oder minus 45 Grad ist, abgelesen von der horizontalen X-X-Achse zu der vertikalen Y-Y-Achse.

5. Falle nach Anspruch 1, wobei ein Lichtstrahl, der von der LED ausgesendet wird, ein extrabreiter Strahl mit einem Winkel zwischen bis zu plus oder minus 75 Grad ist, abgelesen von der horizontalen X-X-Achse zu der vertikalen Y-Y-Achse.

6. Falle nach einem der Ansprüche 1 bis 5, wobei der Strahl ausgestaltet ist, um nur auf eine Seite der Y-Y-Achse Licht auszusenden.

7. Falle nach einem der Ansprüche 1 bis 5, wobei der Strahl ausgestaltet ist, um Licht auf beide Seiten der horizontalen X-X-Achse auszusenden.

8. Falle nach einem der vorhergehenden Ansprüche, wobei die LEDs auf einem Abschirmglied positioniert sind, das Licht in die gewünschte Richtung kanalisiert.

9. Falle nach einem der vorhergehenden Ansprüche, des Weiteren umfassend einen Diffraktor.

10. Falle nach Anspruch 9, wobei der Diffraktor opak ist.

11. Falle nach einem der vorhergehenden Ansprüche, umfassend ein Paar LED-Streifen, die in Richtung des oberen und unteren Bereichs, jedoch nicht in der Mitte, oder auf einer Seite, jedoch nicht der Mitte, des Insekteneinfang- oder -tötungsmittels der Falle positioniert sind.

12. Falle nach einem der Ansprüche 1 bis 11, umfassend einen einzelnen Streifen von LEDs, der in Richtung der Peripherie der Falle positioniert ist.

13. Falle nach Anspruch 1, die eine Wandleuchte ist, umfassend eine Blende (16) und eine oder mehrere unabhängige Öffnungen (18), wodurch ermöglicht wird, dass Insekten in die Falle eintreten, und durch die hindurch insektenanlockendes Licht gestreut wird, und wobei die Klebeplatte entlang der horizontalen Achse X-X (und nicht der vertikalen Achse Y-Y) zwischen der Blende (16) und dem hinteren Gehäuse (12) positioniert ist.

14. Falle nach Anspruch 13, umfassend einen wandseitigen LED-Streifen (22a) und einen abdeckseitigen LED-Streifen (22b), und wobei jede Linse (23) eine Primärlinsenachse (25) in einem Winkel zwischen plus oder minus 15 bis 60 Grad aufweist, gelesen von der Ablesung von der horizontalen X-X-Achse zu der vertikalen Y-Y-Achse.

15. Falle nach Anspruch 14, wobei mindestens ein LED-Streifen eine Primärlinsenachse (25) in einem Winkel zwischen plus oder minus 22,5 oder 45 Grad aufweist, gelesen von der Ablesung von der horizontalen X-X-Achse zu der vertikalen Y-Y-Achse.

16. Falle nach einem der vorhergehenden Ansprüche, des Weiteren umfassend Mittel zum Verringern der Leistung, um entweder die Einfangleistung zu verbessern und/oder die laufenden Kosten zu verringern.

17. Falle nach einem der vorhergehenden Ansprüche, wobei eine Matrix von LEDs (22) auf einer Innenfläche der Abdeckung (16) montiert ist.

18. Falle nach einem der vorhergehenden Ansprüche, die eine SMART Internet-fähige Falle ist.

19. Verfahren zum Anlocken von fliegenden Insekten zu einer Insektenfalle (10), umfassend ein hinteres Gehäuse (12), ein Insekteneinfangmittel (100), eine Abdeckung oder Blende (16) und eine oder mehrere Öffnungen (18), wodurch ermöglicht wird, dass Insekten in die Falle eintreten, wobei das Verfahren Diffusmachen von Licht, das durch lichtemittierenden Dioden (LEDs) (22) emittiert wird, die Ultraviolett-(UV)-Licht emittieren, durch eine Linse (23) umfasst, so dass das Licht
i) nicht entweder von einer Peripherie aus zu einem Zentrum der Falle oder unmittelbar einwärts auf das Insekteneinfangmittel orientiert ist,
ii) nicht angeordnet ist, um Licht im Wesentlichen senkrecht zu einer Normalebene (P-P) des hinteren Gehäuses (12) zu lenken, und
iii) nicht angeordnet, um Licht unmittelbar auswärts durch die Abdeckung (16) hindurch zu lenken, sondern
iv) auf das Insekteneinfang- oder -tötungsmittel oder das hinteren Gehäuse (12) gerichtet ist, wobei jede Linse (23) eine Primärlinsenachse (25) in einem Winkel bis zu zwischen plus oder minus 75 Grad aufweist, abgelesen von einer horizontalen X-X-Achse zu einer vertikalen Y-Y-Achse.

20. Verfahren nach Anspruch 19, worin ein Treiber die Leistungseingabe zeitbasiert anpasst, um die effektive Lebensdauer der UV-LED-Lichtquelle zu maximieren.

## Revendications

1. Piège (10) pour attraper ou éliminer des insectes comprenant :
a. un boîtier arrière (12)
b. un moyen de capture ou d'élimination d'insectes (100) ;
c. une source de lumière (22) attirant les insectes, comprenant des diodes électroluminescentes (DEL) qui émettent un rayonnement ultraviolet (UV) à travers une lentille (23) ; et
d.
i) un couvercle (16), comprenant une ou plusieurs ouvertures (18) permettant aux insectes de pénétrer dans le piège, à travers lesquelles la lumière attirant les insectes est diffusée, ou
ii) une bordure (16) et une ou plusieurs ouvertures indépendantes (18) permettant aux insectes de pénétrer dans le piège et par lesquelles la lumière attirant les insectes est diffusée,
le piège (10) étant **caractérisé par le fait que** les (DEL), qui émettent un rayonnement ultraviolet (UV),
i) ne sont pas orientées de manière à diriger la lumière vers le centre du piège à partir de la périphérie ou immédiatement vers l'intérieur du moyen de capture d'insectes,
ii) ne sont pas agencées pour diriger la lumière de manière sensiblement perpendiculaire à un plan normal (P-P) du boîtier arrière, et
iii) ne sont pas agencées pour diriger la lumière immédiatement vers l'extérieur à travers le couvercle (16), mais
iv) sont montées devant et dirigées vers le moyen de capture ou d'élimination d'insectes ou vers le boîtier arrière (12), chaque lentille (23) ayant un axe primaire de lentille (25) à un angle compris entre plus ou moins jusqu'à 75 degrés tel qu'observé d'un axe horizontal X-X à un axe vertical Y-Y.

2. Piège selon la revendication 1, le faisceau de lumière transmis par la DEL étant un faisceau étroit à un angle de plus ou moins 15 degrés tel qu'observé de l'axe horizontal X-X à l'axe vertical Y-Y.

3. Piège selon la revendication 1, le faisceau de lumière transmis par la DEL étant un faisceau intermédiaire dont l'angle est compris entre plus ou moins 30 degrés tel qu'observé de l'axe horizontal X-X à l'axe vertical Y-Y.

4. Piège selon la revendication 1, le faisceau de lumière transmis par la DEL étant un faisceau large à un angle compris entre plus ou moins jusqu'à 45 degrés tel qu'observé de l'axe horizontal X-X à l'axe vertical Y-Y.

5. Piège selon la revendication 1, le faisceau de lumière transmis par la DEL étant un faisceau extra-large - à un angle compris entre plus ou moins jusqu'à 75 degrés tel qu'observé de l'axe horizontal X-X à l'axe vertical Y-Y.

6. Piège selon l'une quelconque des revendications 1 à 5, le faisceau étant configuré pour transmettre la lumière d'un seul côté de l'axe Y-Y.

7. Piège selon l'une quelconque des revendications 1 à 5, le faisceau étant configuré pour transmettre la lumière des deux côtés de l'axe X-X horizontal.

8. Piège selon l'une quelconque des revendications précédentes, les diodes électroluminescentes étant positionnées sur un élément de blindage qui canalise la lumière dans la direction souhaitée.

9. Piège selon l'une quelconque des revendications précédentes, comprenant en outre un diffracteur.

10. Piège selon la revendication 9, le diffracteur étant opaque.

11. Piège selon l'une quelconque des revendications précédentes, comprenant une paire de bandes DEL positionnées vers le haut et le bas, mais pas au milieu, ou de chaque côté, mais pas au milieu, du moyen de capture ou d'élimination d'insectes du piège.

12. Piège selon l'une quelconque des revendications 1 à 11 comprenant une seule bande de DEL positionnée vers la périphérie du piège.

13. Piège selon la revendication 1, qui est une applique murale comprenant une bordure (16) et une ou plusieurs ouvertures indépendantes (18) permettant aux insectes de pénétrer dans le piège et à travers lesquelles la lumière attirant les insectes est diffusée, et la plaque de colle étant positionnée le long de l'axe horizontal X-X (et non de l'axe vertical Y-Y) entre la bordure (16) et le boîtier arrière (12).

14. Piège selon la revendication 13, comprenant une bande DEL côté mur (22a) et une bande DEL côté couvercle (22b) et chaque lentille (23) ayant un axe de lentille primaire (25) à un angle compris entre plus ou moins 15 et 60 degrés, tel qu'observé de l'axe horizontal X-X à l'axe vertical Y-Y.

15. Piège selon la revendication 14, au moins une bande de DEL ayant un axe de lentille primaire (25) à un angle compris entre plus ou moins 22,5 ou 45 degrés, tel qu'observé de l'axe horizontal X-X à l'axe vertical Y-Y.

16. Piège selon l'une quelconque des revendications précédentes comprenant en outre des moyens pour abaisser la puissance afin soit d'améliorer les performances de capture et/ou de diminuer le coût de fonctionnement.

17. Piège selon l'une quelconque des revendications précédentes, un ensemble de diodes électroluminescentes (22) étant monté sur une face interne du couvercle (16).

18. Piège selon l'une quelconque des revendications précédentes, qui est un piège SMART Internet.

19. Procédé pour attirer les insectes volants dans un piège à insectes (10) comprenant un boîtier arrière (12), un moyen de capture d'insectes (100), un couvercle ou une bordure (16) et une ou plusieurs ouvertures (18) permettant aux insectes de pénétrer dans le piège, le procédé consistant à diffuser de la lumière, émise par des diodes électroluminescentes (DEL) (22) qui émettent un rayonnement ultraviolet (UV), à travers une lentille (23) de telle sorte que la lumière :
i) n'est pas orientée vers le centre du piège à partir de sa périphérie ou immédiatement vers l'intérieur du moyen de capture d'insectes,
ii) n'est pas agencée pour diriger la lumière sensiblement perpendiculairement à un plan normal (P-P) du boîtier arrière (12), et
iii) n'est pas agencée pour diriger la lumière immédiatement vers l'extérieur à travers le couvercle (16), mais
iv) est dirigée vers le moyen de capture ou d'élimination d'insectes ou vers le boîtier arrière (12), chaque lentille (23) ayant un axe primaire (25) formant un angle de plus ou moins 75 degrés tel qu'observé d'un axe horizontal X-X à un axe vertical Y-Y.

20. Procédé selon la revendication 19, un pilote ajustant la puissance absorbée en fonction du temps afin de maximiser la durée de vie effective de la source de lumière à DEL UV.
